# EUROPÄISCHE PATENTSCHRIFT

(11) **EP 2 867 066 B1**
(45) Veröffentlichungstag und Bekanntmachung des Hinweises auf die Patenterteilung: **01.11.2017**
(21) Anmeldenummer: 13745003.7
(22) Anmeldetag: 22.07.2013
(51) Int. Cl.: E06C 1/12, E06C 5/04, B61D 23/02, B60R 3/02

(54) **FAHRZEUG MIT TELESKOPIERBARER EINSTIEGSLEITER**
VEHICLE WITH A TELESCOPING ACCESS LADDER
VÉHICULE AVEC UNE ÉCHELLE D'ACCÈS TÉLESCOPIQUE

(30) Priorität: 08.08.2012 DE 102012214089
(43) Veröffentlichungstag der Anmeldung: 06.05.2015
(73) Patentinhaber: Siemens Aktiengesellschaft, 80333 München (DE)
(72) Erfinder: EGNER, Florian, 82057 Icking (DE); JÜHLING, Sven, 04425 Taucha (DE); LANGENBACHER, Thomas, 86415 Mering (DE); PRÖLL, Günther, 86199 Augsburg (DE)
(86) Internationale Anmeldenummer: PCT/EP2013/065445
(87) Internationale Veröffentlichungsnummer: WO 2014/023566

(56) Entgegenhaltungen:
- EP-A2- 1 619 076
- AU-A1- 2008 202 858
- DE-A1- 3 229 533
- DE-A1- 10 253 542
- GB-A- 326 028
- US-A- 3 774 720
- US-A- 5 064 022
- US-A1- 2009 008 895
- US-A1- 2012 181 109
- US-B2- 7 905 324

## Beschreibung

Die Erfindung betrifft ein Fahrzeug nach dem Oberbegriff des Patentanspruches 1.

Fahrzeuge mit verlängerbaren Leitern sind aus dem Stand der Technik bereits bekannt. So weisen beispielsweise Löschfahrzeuge der Feuerwehr in der Regel eine verlängerbare Leiter auf, die mit einem Antrieb ausgerüstet ist, um die Leiter bis zu einer maximalen Länge auszufahren.

Aus der US 2012/0181109 A1 ist eine Zugmaschine für beispielsweise einen Schürfzug bekannt. Eine Zugangsleiter ist von einer ausgefahrenen Position, in der Zugang zur Zugmaschine möglich ist, und einer verstauten Position überführbar. Die Zugangsleiter umfasst ein längliches erstes Element mit einem ersten Tritt, der sich seitlich von diesem erstreckt. Ein längliches zweites Element ist mit dem ersten Element verbunden und relativ zu diesem verschiebbar. Von jenem erstreckt sich quer ein zweiter Tritt. Das erste Element ist an der Zugmaschine drehbar angelenkt und von einer abgesenkten ersten Position in die Stauposition schwenkbar. Dabei ist das zweite Element über eine Lenkstange mit der Zugmaschine derart verbunden, dass das zweite Element in der Zugangsposition ausgefahren und in der Stauposition bezüglich des ersten Elements eingefahren ist.

Aus der US 5,064,022 ist eine Leiter für große Baumaschinen, wie beispielsweise Muldenkipper oder ähnliche Fahrzeuge, bekannt, die eine Bedienstation in einem beträchtlichen Abstand vom Boden aufweisen. Die ausfahrbare Leiter hat einen festen Leiterteil, der fest am Fahrzeug angebracht ist. Ein einziehbares Leiterelement ist bezüglich eines Rahmenelements der Leiter verschiebbar angeordnet. Das einziehbare Leiterelement wird durch eine elektrische Seilwinde von der Bedienstation des Fahrzeugs aus gesenkt und angehoben.

Die US 3,774,720 offenbart eine Bootsleiter für Freizeitboote, um es einem Benutzer zu ermöglichen, einfach aus dem Boot ins Wasser und umgekehrt zu gelangen. Die Leiter umfasst einen bewegbaren Abschnitt und einen festen Abschnitt, bezüglich dessen der bewegbare Abschnitt von Hand verschiebbar ist.

In der Eisenbahntechnik werden üblicherweise Lokomotiven mit Einstiegsleitern ausgerüstet, die nicht verlängerbar sind und fest an der Seitenwand der Lokomotive befestigt sind. Die Einstiegsleiter ermöglicht dem Zugführer auch dann in den Führerraum zu gelangen, wenn die Lokomotive im freien Gelände und nicht an einem Bahnsteig abgestellt ist. Bei verlängerbaren Einstiegsleitern hat sich als nachteilig erwiesen, dass diese von Hand nur aufwändig verlängert und anschließend wieder in ihre ursprüngliche Stellung überführt werden können. Die AU2008202858A1 offenbart ein Schienenfahrzeug nach dem Oberbegriff des Anspruchs 1. Eine unterhalb einer Einstiegstür am Fahrzeug angeordnete Einstiegsleiter ist an ihrer von der Einstiegstür abgewandten Seite verlängerbar.

Aufgabe der Erfindung ist es, ein Fahrzeug der eingangs genannten Art bereitzustellen, das bequem zugänglich ist, wobei die Unfallgefahr minimiert ist.

Erfindungsgemäß wird daher ein Fahrzeug mit den Merkmalen des Patentanspruches 1 vorgeschlagen. Demnach ist ein Antrieb vorgesehen, der die Einstiegsleiter von einer eingefahrenen Stellung zu einer ausgefahrenen Stellung hin überführt. Ferner sind Federmittel zum Halten der Einstiegsleiter in ihrer eingefahrenen Stellung vorgesehen, wobei der Antrieb die Einstiegsleiter entgegen der Federkraft der Federmittel verlängert und wobei die Federmittel die Einstiegsleiter bei fehlendem Antrieb in ihre eingefahrene Stellung überführen, wobei die Federmittel wenigstens eine Gasfeder aufweisen. Im Rahmen der Erfindung muss die Einstiegsleiter nicht mehr von Hand zwischen den verschiedenen Stellungen hin und her bewegt werden. Vielmehr ist es im Rahmen der Erfindung möglich, hierfür einen Antrieb einzusetzen, wobei der Antrieb beispielsweise über eine geeignete Fernsteuerung in Gang gesetzt werden kann. Ein Nutzer kann somit auch in unwegsamem Gelände oder bei großen Höhenunterschieden zwischen dem Geländeboden und der untersten Sprosse der Einstiegsleiter eine Verlängerung der Einstiegsleiter bewirken. Die Erfindung hat sich im Bereich des Schienenverkehrs als vorteilhaft erwiesen. Hintergrund ist, dass für Schienenfahrzeuge ein so genanntes Umgrenzungsprofil definiert ist. Das Schienenfahrzeug darf keine Komponenten aufweisen, welche über das Umgrenzungsprofil hinausragen, da es ansonsten zwangsläufig zu Unfällen kommen würde. Erfindungsgemäß ist die Einstiegsleiter in der eingefahrenen Stellung innerhalb des Umgrenzungsprofils angeordnet. In der ausgefahrenen Stellung überragt die Einstiegsleiter jedoch das Umgrenzungsprofil. Um Unfälle zu vermeiden, sind erfindungsgemäß Federmittel vorgesehen, die so in oder an der Einstiegsleiter und/oder dem Schienenfahrzeug befestig sind, dass die Einstiegsleiter bei fehlendem Antrieb in ihre eingefahrene Stellung überführt und/oder in dieser gehalten wird. Der Antrieb ermöglicht zwar eine Verlängerung der Einstiegsleiter nach unten. Dabei muss der Antrieb jedoch eine Antriebskraft erzeugen, welche die entgegengesetzt wirkenden Federkräfte überwindet. Die Federmittel sind hierbei so bemessen, dass die Einstiegsleiter zwischen der eingefahrenen und der maximal ausgefahrenen Stellung durch den Antrieb verschoben werden kann, ohne dass Beschädigungen an den Federmitteln auftreten, wie beispielsweise irreversible Verformungen oder dergleichen. Erfindungsgemäß umfassen die Federmittel wenigstens eine Gasfeder. Vorzugsweise sind zwei Gasfedern vorgesehen, die beispielsweise innerhalb hohler Seitenholme der Einstiegleiter angeordnet sind.

Auch der Antrieb ist im Rahmen der Erfindung grundsätzlich beliebig. So ist der Antrieb beispielsweise ein elektrischer Antrieb.

Vorzugsweise ist der Antrieb jedoch ein hydraulischer und bevorzugt ein pneumatischer Antrieb. Ein pneumatischer Antrieb ist insbesondere im Zusammenhang mit Fahrzeugen vorteilhaft, die aufgrund der ohnehin vorhandenen Druckluftversorgung zum Bremsen des Fahrzeugs keine zusätzlichen Motoren oder dergleichen benötigen. Die Erfindung ist somit besonders kostengünstig, wenn das Fahrzeug ein Schienenfahrzeug oder ein Lastkraftwagen ist.

Vorteilhafterweise ist die Einstiegsleiter eine teleskopierbare Einstiegsleiter. Eine teleskopierbaren Einstiegsleiter ist besonders platzsparend. Auch dies hat sich besonders im Bereich des Schienenverkehrs als vorteilhaft erwiesen, da der Bauraum, beispielsweise von Lokomotiven, stark begrenzt ist. Gemäß einer diesbezüglichen Weiterentwicklung weist die Einstiegsleiter zwei nebeneinander liegende hohle Holme und zwischen den Holmen verlaufende Sprossen auf, wobei wenigstens ein Leiterabschnitt vorgesehen ist, der zwei nebeneinander liegende Hohlprofile aufweist, die über eine Sprosse miteinander U-förmig verbunden sind, wobei sich die freien Enden der Hohlprofile jeweils in den zugeordneten Holm oder in das zugeordnete Hohlprofil hinein erstrecken. Um ein Herausfallen aus den Holmen beziehungsweise den anderen Leiterabschnitten zu vermeiden, sind in den Holmen und/oder den Hohlprofilen zweckmäßige Anschlagschultern und Widerlager ausgebildet.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: eine Teilansicht eines Ausführungsbeispiels des erfindungsgemäßen Schienenfahrzeugs,
- Figur 2: den Einstieg des Schienenfahrzeugs gemäß Figur 1 in einer eingefahrenen Stellung,
- Figur 3: die Einstiegsleiter gemäß Figur 2 in einer ausgefahrenen Stellung mit eingezeichnetem Umgrenzungsprofil und
- Figur 4: die Leiter gemäß Figur 3 in einer ausgefahrenen Stellung mit eingezeichnetem Umgrenzungsprofil zeigen.

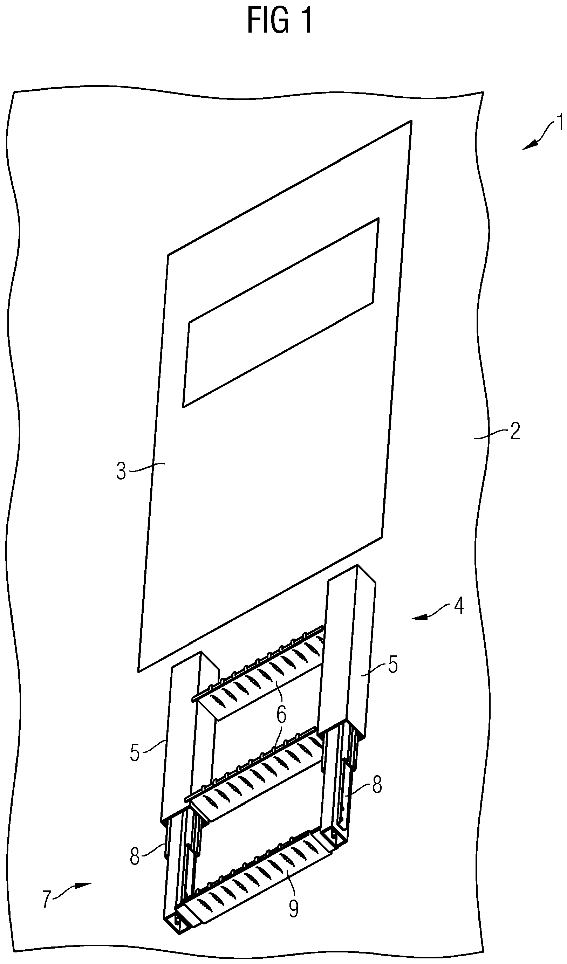

Figur 1 zeigt eine Teilansicht eines Ausführungsbeispiels des erfindungsgemäßen Fahrzeugs 1, bei dem es sich um ein Schienenfahrzeug handelt. Das Schienenfahrzeug 1 weist einen Wagenkasten auf, von dem lediglich ein Teil seiner Seitenwand 2 erkennbar ist. In der Seitenwand 2 ist eine Einstiegstür 3 erkennbar, die zu einem Innenraum, hier einem Führerstand einer Lokomotive, führt. Unterhalb der Fahrzeugtür 3 ist eine Einstiegsleiter 4 angeordnet, welche es dem Fahrzeugführer ermöglicht, auch auf bahnsteigfreiem Gelände bequem in den Führerstand zu gelangen. Die Einstiegsleiter 4 ist verlängerbar und weist zwei nebeneinander liegende Holme 5 auf, mit denen die Einstiegsleiter 4 an der Seitenwand 2 befestigt ist. Zwischen den Holmen 5 erstrecken sich, im Wesentlichen rechtwinklig dazu, Sprossen 6. Ferner ist ein teleskopierbarer Leiterabschnitt 7 erkennbar, der zwei nebeneinander liegende Hohlprofile 8 aufweist. Auch die Hohlprofile 8 sind durch eine Sprosse 9 miteinander verbunden. Die Hohlprofile 8 erstrecken sich mit ihrem freien, also von der Sprosse 9 abgewandten Ende jeweils in einen der hohlen Holme 5 hinein. Der Leiterabschnitt 7 ist somit U-förmig ausgebildet. Figürlich nicht dargestellte Anschlagschultern und Widerlager verhindern ein Herausfallen der beiden Hohlprofile 8 aus den Holmen 5.

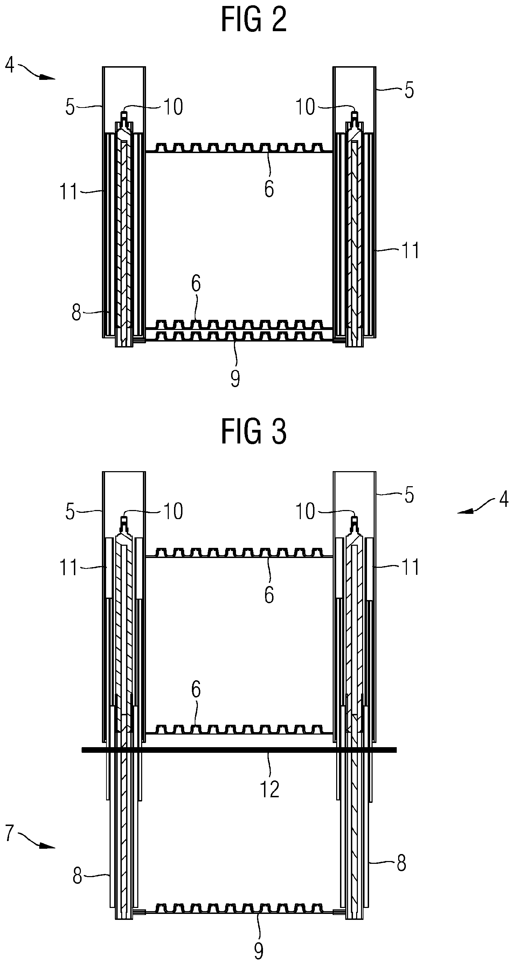

Figur 2 zeigt die Einstiegsleiter 4 in einer geschnitten Vorderansicht. Die Einstiegsleiter 4 befindet sich in Figur 2 in ihrer eingefahrenen Stellung, in der die Hohlprofile 8 nahezu vollständig innerhalb der hohlen Home 5 angeordnet sind. Ferner ist erkennbar, dass die Einstiegsleiter 4 mit Federmitteln 10 sowie mit einem Antrieb 11 ausgerüstet ist. Die Federmittel 10 umfassen zwei Gasfedern 10, die jeweils teilweise in einem pneumatischen Zylinder 11 des Antriebs angeordnet sind. Dabei ist die Gasfeder 10 in dem in Figur 2 gezeigten oberen Ende fest mit dem jeweils zugeordneten Holm 5 verbunden, wobei das andere Ende der Gasfeder 10 fest mit dem ebenfalls fest zugeordneten Hohlprofil 8 des Leiterabschnitts 4 verbunden ist. Der pneumatische Zylinder 11 ist mit einem figürlich nicht dargestellten Hauptluftbehälter der Lokomotive über ein ansteuerbares Antriebsventil verbunden.

In Figur 3 ist die Einstiegsleiter 4 in ihrer ausgefahrenen Stellung gezeigt. Hierzu wurde der pneumatische Zylinder 11 mit Druckluft aus dem Hauptluftbehälter befüllt, wodurch die Gasfeder 10 entgegen ihrer Federkraft ausgedehnt wird. Somit ist ein pneumatischer Antrieb zum Überführen der Einstiegsleiter 4 von der eingefahrenen in ihre ausgefahrene Stellung bereitgestellt. Wird der pneumatische Zylinder 11 mittels des nicht gezeigten Antriebsventils entlüftet, stellt die Gasfeder 10 eine Rückstellkraft bereit, durch welche der Leiterabschnitt 7 in die in Figur 2 gezeigte eingefahrene Stellung überführt wird.

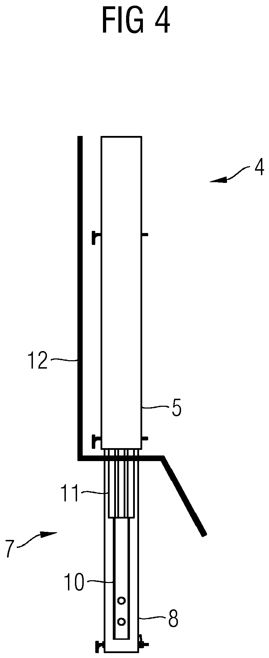

In Figur 4 ist durch die fette Linie ein Umgrenzungsprofil 12 des Schienenfahrzeugs 1 angedeutet. Es ist erkennbar, dass der Leiterabschnitt 7 in der ausgefahrenen Stellung das Umgrenzungsprofil 12 überragt.

Die Figur 4 zeigt die Einstiegsleiter 4 gemäß Figur 3 in einer Seitenansicht. Auch hier ist das Umgrenzungsprofil 12 durch eine fette Linie verdeutlicht. Erfindungsgemäß ist sichergestellt, dass bei fehlendem Antrieb das Umgrenzungsprofil 12 durch die ausgefahrene Einstiegsleiter nicht überschritten wird. Somit sind Unfälle im Rahmen der Erfindung vermieden.

## Patentansprüche

1. Schienenfahrzeug (1), insbesondere Lokomotive, mit einer Einstiegstür (3), einer unterhalb der Einstiegstür (3) am Schienenfahrzeug (1) angeordneten Einstiegsleiter (4), die an ihrer von der Einstiegstür (4) abgewandten Seite verlängerbar ist, **dadurch gekennzeichnet, dass** das Schienenfahrzeug (1) einen Antrieb (11), der die Einstiegsleiter (4) von einer eingefahrenen Stellung zu einer ausgefahrenen Stellung hin überführt, und Federmittel (10) zum Halten der Einstiegsleiter (4) in ihrer eingefahrenen Stellung aufweist, wobei der Antrieb (11) die Einstiegsleiter (4) entgegen der Federkraft der Federmittel (10) verlängert, wobei die Federmittel (10) die Einstiegsleiter (4) bei fehlendem Antrieb in ihre eingefahrene Stellung überführen und wobei die Federmittel wenigstens eine Gasfeder (10) aufweisen.

2. Schienenfahrzeug (1) nach Anspruch 1,
**dadurch gekennzeichnet, dass** der Antrieb ein hydraulischer oder ein pneumatischer Antrieb (11) ist.

3. Schienenfahrzeug (1) nach einem der vorhergehenden Ansprüche,
**dadurch gekennzeichnet, dass** die Einstiegsleiter eine teleskopierbare Einstiegsleiter (4) ist.

4. Schienenfahrzeug (1) nach Anspruch 3,
**dadurch gekennzeichnet, dass** die Einstiegsleiter (4) zwei nebeneinander liegende hohle Holme (5) und zwischen den Holmen verlaufende Sprossen (6) aufweist, wobei wenigstens ein Leiterabschnitt (7) vorgesehen ist, der zwei nebeneinander liegende Hohlprofile (8) aufweist, die über eine Sprosse (9) miteinander U-förmig verbunden sind, wobei die Hohlprofile (8) mit ihrem freien Ende in den Holmen (5) oder in den Hohlprofilen (8) eines anderen Leiterabschnitts (7) angeordnet sind.

5. Schienenfahrzeug (1) nach Anspruch 4,
**dadurch gekennzeichnet, dass** sich in jedem Holm (5) und in jedem Hohlprofil (8) eine Gasfeder (10) erstreckt, die einerseits an einem zugeordneten Holm (5) und andererseits an dem innersten Hohlprofil (8) abgestützt ist.

## Claims

1. Rail vehicle (1), in particular locomotive, with an entry door (3), an entry ladder (4) disposed below the entry door (3) on the rail vehicle (1), which is extendable on its side facing away from the entry door (4), **characterised in that** the rail vehicle (1) has a drive (11) which transfers the entry ladder (4) from a retracted position to an extended position, and spring means (10) for holding the entry ladder (4) in its retracted position, wherein the drive (11) extends the entry ladder (4) against the spring force of the spring means (10), wherein the spring means (10) transfers the entry ladder (4) into its retracted position in the absence of the drive and wherein the spring means has at least one gas spring (10).

2. Rail vehicle (1) according to claim 1,
**characterised in that**
the drive is a hydraulic or a pneumatic drive (11).

3. Rail vehicle (1) according to one of the preceding claims, **characterised in that**
the entry ladder is a telescopable entry ladder (4).

4. Rail vehicle (1) according to claim 3,
**characterised in that**
the entry ladder (4) has two hollow side rails (5) lying next to one another and has rungs (6) running between the side rails, wherein at least one ladder section (7) is provided which has two hollow profiles (8) lying next to one another, which are connected to one another via a rung (9) in a U shape, wherein the hollow profiles (8) are arranged with their free end in the side rails (5) or in the hollow profiles (8) of another ladder section (7).

5. Rail vehicle (1) according to claim 4,
**characterised in that**
a gas spring (10) extends in each side rail (5) and in each hollow profile (8), which is supported on one side on an assigned side rail (5) and on the other side on the innermost hollow profile (8).

## Revendications

1. Véhicule (1) ferroviaire, notamment locomotive, comprenant une porte (3) d'accès, une échelle (4) d'accès, qui est montée sur le véhicule (1) ferroviaire en dessous de la porte (3) d'accès et qui peut être prolongée sur son côté éloigné de la porte (3) d'accès,
**caractérisé en ce que**
le véhicule (1) ferroviaire a un entraînement (11), qui fait passer l'échelle (4) de montée d'une position escamotée à une position déployée et des moyens à ressort pour maintenir l'échelle (4) d'accès dans sa position escamotée, l'entraînement (11) prolongeant l'échelle (4) d'accès à l'encontre de la force de ressort des moyens (10) à ressort, les moyens (10) à ressort faisant passer l'échelle (4) d'accès, lorsque l'entraînement est défectueux, dans sa position escamotée et les moyens à ressort ayant au moins un ressort (10) à gaz.

2. Véhicule (1) ferroviaire suivant la revendication 1, **caractérisé en ce que**
l'entraînement est un entraînement (11) hydraulique ou un entraînement (11) pneumatique.

3. Véhicule (1) ferroviaire suivant l'une des revendications précédentes,
**caractérisé en ce que**
l'échelle d'accès est une échelle (4) d'accès télescopique.

4. Véhicule (1) ferroviaire suivant la revendication 3, **caractérisé en ce que** l'échelle (4) d'accès a deux montants (5) creux disposés l'un à côté de l'autre et des échelons (6) s'étendant entre les montants, dans lequel il est prévu au moins un tronçon (7) de l'échelle, qui a deux profilés (8) creux disposés l'un à côté de l'autre et reliés en forme de U entre eux par un échelon (9), les profilés (8) creux étant montés par leur extrémité libre dans les montants (5) ou dans les profilés (8) creux d'un autre tronçon (7) de l'échelle.

5. Véhicule (1) ferroviaire suivant la revendication 4, **caractérisé en ce que**
dans chaque montant (5) et dans chaque profilé (8), s'étend un ressort (10) à gaz, qui s'appuie, d'une part, sur un montant (5) associé et, d'autre part, sur le profilé (8) creux le plus à l'intérieur.
